# EUROPÄISCHE PATENTSCHRIFT

(11) **EP 1 873 094 B1**
(45) Veröffentlichungstag und Bekanntmachung des Hinweises auf die Patenterteilung: **14.01.2009**
(21) Anmeldenummer: 07012685.9
(22) Anmeldetag: 28.06.2007
(51) Int. Cl.: B65G 53/32, B65G 53/66

(54) **Mörtel- und Estrich-Förderverfahren sowie Mörtel- und Estrich-Förderer zur Durchführung des Verfahrens**
Method of conveying mortar and screed and mortar and screed conveyor for carrying out the method
Procédé de transport de mortier et chape et transporteur de mortier et chape pour la réalisation du procédé

(30) Priorität: 28.06.2006 DE 102006030071
(43) Veröffentlichungstag der Anmeldung: 02.01.2008
(73) Patentinhaber: Balders, Günter, 48529 Nordhorn (DE)
(72) Erfinder: Balders, Günter, 48529 Nordhorn (DE)
(74) Vertreter: Griepenstroh, Jörg

(56) Entgegenhaltungen:
- EP-A1- 1 172 313
- DE-A1- 3 123 283
- DE-A1- 3 314 618
- GB-A- 1 005 427
- GB-A- 1 220 220
- US-A- 1 684 370
- US-A- 3 429 554

## Beschreibung

Die Erfindung betrifft ein Mörtel- und Estnch-Förderverfahren sowie eine Vorrichtung zur Durchführung des Verfahrens.

Bei Baumaßnahmen mit schnellem Baufortschritt, insbesondere bei Gewerbebauten ist ein Fliesenleger häufig vor die Aufgabe gestellt, noch relativ junge Untergründe möglichst rasch mit Fliesenplatten zu belegen. Ein besonderes Problemfeld stellt die Mörtelbettung dar. Während Zementestrich auf Grund seiner gegenüber einem Mörtelbett regelmäßig höheren Feuchtigkeit relativ leicht zu verdichten ist, ist dies bei Mörtelbettungen, insbesondere bei Mörtelbettungen für hochbelastbare Bodenbeläge, wesentlich schwieriger. Das Mörtelbett darf nur eine geringe Feuchtigkeit aufweisen, da die Fliesen im Gegensatz zu einem abgetrockneten Zementestrich in dem frischen Mörtelbett verlegt werden. Auch durch die verwendeten Kontaktschichten kommt Feuchtigkeit in das Mörtelbett. Dementsprechend werden die Mörtelbettungen relativ trocken ausgeführt, d.h. sie sind in der Regel erdfeucht. Eine erdfeuchte Mörtelmasse stellt besondere Anforderungen an Mörtelfördersysteme. Es wurde festgestellt, dass die bekannten Mörtel-Fördersysteme bei Entfernungen oberhalb von 50 Metern nur geringe Förderleistungen aufweisen.

In Abhängigkeit von den Mörteleigenschaften leisten z.B. DruckJuftförderer ca. 1 m³- 3 m³ Mörtel- oder Estrichmasse je Stunde. Betonpumpen sind zwar erheblich leistungsfähiger, können aber keine erdfeuchten Mörtel- oder Estrichmassen fördern.

Bei der Erstellung großflächiger Fliesenfußböden - z.B. im Rüttelverfahren - sind jedoch Förderleistungen deutlich oberhalb von 10 m³/h wünschenswert. Zurzeit werden derartige Mengen vornehmlich von Frischmörtelherstellern mittels Fahrmischem auf der Baustelle angeliefert. Der weitere Transport innerhalb von Gebäuden ohne große Öffnungen erfolgt dann z.B. mit Schubkarren.

Die Frischmörtelzufuhr in Fahrmischem hat sich jedoch bei Mörtelrezepturen mit einem Wasser/Zementfaktor (W/Z-Faktor) unterhalb 0,45 als problematisch erwiesen. Die Verdunstungszeit der Mörtelrezeptur verlängert sich um die Anlieferungs- und Entladezeit und führt leicht zum so genannten "Verdursten" der Mörtel rezeptur, d.h. der W/Z-Faktor sinkt auf einen Wert < 0,3 ab. Problematisch hierbei ist, dass derart niedrige W/Z-Faktoren zum Versagen von Zusatzmitteln, wie z.B. Verzögerem, führen und der Zement nicht mehr vollständig aushärtet.

Ferner neigt der Transport von erdfeuchtem Mörtel- oder Estrichmassen in Fahrmischem zu der gefürchteten Pellet-Bildung. Dabei bilden sich kugelförmige Bindemittelanreicherungen um einzelne Körner des Zuschlagstoffes, mit der Folge, dass die Bindemittelanreicherungen für die restlichen Mörtelbestandteile zum Teil eine erhebliche Abmagerung bedeuten.

Unterschiedliche, am Markt erhältliche Förderer erreichen bei einer Förderschlauchlänge von 50 Metern und bei einem W/Z-Faktor < 0,42 eine Förderleistung von ca. 2 m³/h. Bei einem Kesselvolumen von 180 Litern betragen Füll- und Förderzyklus jeweils ca. 2,5 Minuten. Auf Grund des relativ langen Füllzyklusses lassen sich kaum höhere Fördermengen erreichen. Der Versuch, mit größeren Kesselfüllungen von beispielsweise 400 Litern den Anteil der Förderzeit gegenüber der Füllzeit zu verbessern, führte anstatt der erhofften Leistungssteigerung zu vermehrten Schlauchverstopfungen und Druckanstiegen im Förderkessel mit der Folge, dass beim Auflösen der Schlauchverstopfung explosionsartig große Luftmengen freigesetzt wurden, die am Ende des Förderschlauchs expandierten. Es wird vermutet, dass sich auf Grund der größeren Kesselfüllung längere Abschnitte des Förderschlauchs mit Fördergut füllen, wobei die Reibung zwischen Fördergut und Förderschlauch in diesen längeren Abschnitten so groß wird, dass ein Weitertransport nur unter erheblicher Drucksteigerung bzw. unter mechanischer Einwirkung möglich ist, wobei unter mechanischer Einwirkung ein manuelles Walken des Schlauches zu verstehen ist, was zwangsläufig zu einer Störung im Arbeitsablauf, und damit zu Verzögerungen führt. Ein System, das sich mit diesem Problem befasst, ist aus dem Dokument DE 31 23 283 bekannt.

Bekannt ist weiterhin ein System, bei welchem mit einer horizontal angeordneten Doppelkesselanlage eine kontinuierliche Förderung erreicht werden soll. Über eine Wechselweiche wird erreicht, dass gleichzeitig jeweils ein Kessel befüllt und der andere entleert werden kann. Die theoretische Leistungsverdoppelung wird auch hiermit nicht erreicht. Vielmehr treten die gleichen Symptome wie bei der Verwendung von Kesseln mit einem Volumen von 400 Litern auf. Das Problem ist vermutlich, dass sich zu viel Material am Stück innerhalb des Förderschlauchs befindet und daher hohe Reibungsverluste auftreten.

Ein weiteres Förderprinzip sieht keinen Druckkessel vor, sondern übergibt das Fördergut mittels rotierenden Kammern dosiert an eine Druckluftförderung. Dabei wird permanent ein Teil der Kammern befüllt, während gleichzeitig ein anderer Teil der Kammern entleert wird. Trotz der dosierten Materialübergabe kann dieser Fördertyp lediglich Trockengut mit < 5 % Restfeuchte transportieren und benötigt für die Förderung große Luftmengen. Diese verursachen einen fliegenden Transport des Fördergutes mit der Neigung zur Trennung der groben und feinen Partikel. Förderversuche mit erdfeuchtem Mörtel waren auf Grund permanenter Verstopfungen im Förderschlauch erfolglos. Mit den bekannten Druckluft-Förderanlagen ist - auch durch kontinuierliche Förderung unter Verwendung einer Weiche oder unter Verwendung größerer Druckkessel - keine wesentliche Leistungssteigerung bei der Förderung von erdfeuchtem Mörtel- bzw. Estrichmassen möglich. Die abwechselnd im Füll- oder Förderzyklus arbeitenden, so genannten Estrichpumpen, besitzen nunmehr schon seit Jahrzehnten noch immer eine sehr begrenzte Leistungsfähigkeit.

Hiervon ausgehend, liegt der Erfindung die Aufgabe zu Grunde, eine Fördervorrichtung und ein Förderverfahren zum Transport von Mörtel- und Estrich massen aufzuzeigen, das wesentlich höhere Förderleistungen ermöglicht und daher auch einen Transport von erdfeuchtem Mörtel mit einem W/Z-Faktor unterhalb 0,45 auf der Baustelle ermöglicht, ohne dass es zu einer Beeinträchtigung der Mörtel- bzw. Estrichqualität z.B. durch Entmischung kommt.

Diese Aufgabe wird durch ein Mörtel- und Estrich-Förderverfahren mit den Merkmalen des Patentanspruchs 1 gelöst. Eine Vorrichtung zur Durchführung des Verfahrens ist Gegenstand des Patentanspruchs 11.

Vorteilhafte Weiterbildungen des Erfindungsgedankens sind Gegenstand der jeweiligen Unteransprüche.

Bei dem erfindungsgemäßen Verfahren soll ein Mörtel- und Estrichförderer zum Einsatz kommen, bei welchem das Fördergut mittels Druckluft transportiert wird. Der bereitzustellende Mörtel- und Estrich-Förderer ist daher an eine Druckluftquelle anzuschließen. Der Mörtel- und Estrich-Förderer umfasst einen Füllkessel und einen Förderkessel. Der Füllkessel ist dem Förderkessel vorgeschaltet und wird mit Fördergut beschickt. Das Fördergut kann fertig gemischt in den Füllkessel gegeben werden. Grundsätzlich ist es auch denkbar, dass die einzelnen Mischungsbestandteile, insbesondere Sand, Zement, Wasser und gegebenenfalls Zusatzmittel, wie z.B. Verzögerer erst im Füllkessel zusammengegeben werden, so dass das Anmischen des Förderguts erst im Füllkessel erfolgt.

Der Füllkessel kann über einen Förderguteinlass druckfest geöffnet und verschlossen werden. Wenn eine bestimmte Menge des Förderguts in dem Füllkessel aufgenommen ist, wird ein Fördergutdurchlass geöffnet, so dass das Fördergut in den Förderkessel übertreten kann. Auf Grund der sehr zähen Konsistenz von erdfeuchten Mörtelmischungen erfolgt dies unter Zuhilfenahme eines mechanischen Fördermittels, insbesondere einer Schnecke, die das Fördergut in dem Förderkessel zum Fördergutdurchlass bewegt.

Wichtig in diesem Zusammenhang ist, dass der Förderkessel unter Druck steht, da an den Förderkesseln ein Förderschlauch angeschlossen ist, in den das Fördergut gepresst werden soll. Der Fördergutdurchlass kann also erst dann geöffnet werden, wenn der Förderguteinlass geschlossen ist und wenn ein Druckausgleich zwischen dem Förderkessel und dem Füllkessel hergestellt worden ist. Daher ist der Füllkessel mit dem Förderkessel über eine Druckausgleichsleitung verbunden. Der Fördergutdurchlass wird unter Aufrechterhaltung eines Fördersolldrucks im Förderkessel geöffnet, so dass der Förderdruck beim Öffnen des Förderkessels nicht auf den Atmosphärendruck absinkt, sondern kontinuierlich aufrecht erhalten wird, selbst wenn der Förderkessel neu beschickt wird.

Wenn die gewünschte Menge des Förderguts in den Förderkessel überführt worden ist, wird der Fördergutdurchlass wieder geschlossen. Anschließend wird der Füllkessel druckentlastet, so dass der Förderguteinlass wieder geöffnet werden kann, um neues Fördergut in den Füllkessel einzufüllen.

Der Füllkessel dient gewissermaßen als Druckschleuse und damit als Trenneinrichtung zwischen dem Atmosphärendruck und dem im Förderkessel angestrebten Fordersolldruck, der möglichst konstant gehalten werden muss, um eine gleichmäßige und kontinuierliche Förderung zu gewährleisten.

Wichtig bei dem erfindungsgemäßen Förderverfahren ist auch eine an den Anschlussstutzen des Förderschlauchs angeschlossene Bypass-Druckleitung. Das Fördergut wird aus dem Förderkessel über den Förderdruck und ein Rührwerk innerhalb des Förderkessels in den Anschlussstutzen gedrängt, wo sich der Förderstrang ausbildet. Über die Bypass-Druckleitung wird dieser Förderstrang in kleinere Abschnitte unterteilt, so dass das Fördergut nicht am Stück, sondern in kleineren Portionen durch den Förderschlauch gedrückt wird. Der Druckabfall innerhalb des Förderschlauchs ist so groß, dass der Druck in der Bypass-Druckleitung selbst bei einem relativ kurzen Anschlussstutzen in der Regel bereits kleiner ist als der im Förderkessel herrschende Druck. Das Besondere bei der Verwendung der Bypass-Druckleitung im Zusammenhang mit dem beanspruchten Verfahren ist, dass auch der Druck in der Bypass-Druckleitung immer größer ist als der Atmosphärendruck, da eine kontinuierliche Förderung angestrebt wird, und zwar unter der Bedingung, dass der Druck im Förderkessel nicht auf den Atmosphärendruck abfällt.

In der Praxis haben sich hervorragende FörderlEistungen dadurch ergeben, dass der Förderschlauch nur sehr dosiert mit Fördergut beschickt worden ist. Ein wichtiger Parameter in diesem Zusammenhang ist der Förderdruck. Wenn der Förderdruck über einen vorgegebenen Maximalwert ansteigt, nimmt auch das Risiko einer Verstopfung des Förderschlauchs zu. Wenn unter diesen Bedingungen eine weitere Befüllung des Förderkessels erfolgt, steigt die Gefahr einer Förderschlauchverstopfung weiter. Es ist daher vorgesehen, dass ein Beschicken des Förderkessels nur dann erfolgt, wenn ein vorgegebener Mindestfüllstand des Förderkessels erreicht wird und wenn gleichzeitig der Druck im Förderkessel einen vorgegebenen Maximaldruck nicht überschreitet. Vielmehr soll das Befüllen des Förderkessels so lange verzögert werden, bis sich ein für das System günstiger Fördersolldruck eingestellt hat, so dass keine Verstopfungen des Systems provoziert werden, Im ungekehrten Fall, d.h. bei raschem Abfall des Förderdrucks im Förderkessel ist es auch möglich, das Befüllen des Förderkessels zu beschleunigen, da ein abfallender Förderdruck ein Zeichen für geringe Reibungsverluste im Förderschlauch ist. Selbstverständlich hängen die Reibungsverluste eng mit der Konsistenz des Förderguts zusammen, wobei der Wasser/Zement-Faktor eine wesentliche Einflussgröße ist.

Der besondere Vorteil des erfindungsgemäßen Verfahrens ist darin zu sehen, dass der Fördervorgang kontinuierlich durchgeführt werden kann, ohne dass ein aufwändiger Weichenmechanismus, wie bei zwei parallel zueinander geschalteten Förderkesseln, erforderlich ist. Die Förderung erfolgt bei dem erfindungsgemäßen Verfahren ausschließlich über einen einzigen Förderkessel. Bei erdfeuchten Mörtelmassen hat sich als vorteilhaft erwiesen, wenn in den Förderkesseln maximal 150 Liter Fördergut mit einem Wasser/Zement-Faktor < 0,45 eingefüllt werden. Das Volumen des Förderkessels sollte mindestens 20 % größer sein als der Höchstfüllstand des Förderguts in dem Förderkessel. Als besonders zweckmäßig haben sich relativ klein dimensionierte Förderkessel erwiesen, in die maximal 100 Liter Fördergut mit einem Wasser/Zement-Faktor 0,45 eingefüllt werden. Selbstverständlich ist auch der Einsatz großvolumigerer Förderkessel möglich, wobei zu bedenken ist, dass der Druckaufbau eines großvolumigen Druckpolsters eine gewisse Zeit benötigt und sich daher nachteilig auf das Durchsatzvolumen auswirken kann. Die Druckluftquelle sollte eine hinreichende Luftleistung aufweisen, wobei eine Ansaugluftleistung von mindestens 4m³/min bei einem Gegendruck von 5bar als zweckmäßig angesehen wird.

Zur Vermeidung von Verstopfungen wird es darüber als zweckmäßig angesehen, wenn bei einem Anstieg des Drucks im Förderkessel über einen vorgegebenen Maximalwert Druckluft über eine weitere Bypass-Druckleitung in einen entfernt vom Anschlussstutzen gelegenen Abschnitt des Förderschlauchs eingeblasen wird. Selbstverständlich können mehrere derartige Bypassdruckleitungen vorgesehen sein, die beispielsweise in Abständen von 20 Metern Entfernung vom Anschlussstutzen an den Förderschlauch angeschlossen sind. Wenn es zu einem starken Druckanstieg im Förderkessel kommt, ist dies ein Zeichen dafür, dass eine Verstopfung im Förderschlauch droht. Durch das Einblasen zusätzlicher Druckluft in den Förderschlauch, und zwar in entfernt von der Einspeisestelle gelegene Bereichen, ist es möglich, den hinteren Teilabschnitt des Förderschlauchs zu entleeren, was erfahrungsgemäß zu einem raschen Druckabfall im Förderkessel führt, so dass der normale Förderprozess störungsfrei fortgesetzt werden kann.

Sehr wichtig in diesem Zusammenhang ist die Erkenntnis, dass grundsätzlich nur kurze Längenabschnitte des Förderschlauchs mit Fördergut befüllt werden dürfen, wobei dies wiederum nur bei kleinen Förderkesselri gewährleistet werden kann.

Darüber hinaus muss über eine Steuereinheit sichergestellt werden, dass ein Mindestfüllstand im Förderkessel nicht unterschritten wird, da eine vollständige Entleerung des Förderschlauchs nachteilig für den Volumendurchsatz je Stunde ist. Der Füllstand des Förderguts kann unmittelbar über Messvorrichtungen erfasst werden. Zweckmäßig ist es allerdings, den Füllstand des Förderguts im Förderkessel über die Leistungsaufnahme eines Rührwerks des Förderkessels zu bestimmen. Das Rührwerk im Förderkessel sorgt für eine kontinuierliche Durchmischung des Förderguts und stellt sicher, dass das Fördergut überhaupt in Richtung des Anschlusses für den Förderschlauch gelangt. Bei niedrigem Füllstand nimmt der Antriebsmotor des Rührwerks weniger Leistung auf als bei höherem Füllstand. Wenn nun eine bestimmte, vorher festgelegte, Leistungsaufnahme unterschritten wird, ist dies ein Zeichen dafür, dass der Förderkessel bald leer ist. Um dies zu vermeiden, muss Fördergut nachgeführt werden, indem der Förderguteinlass des Füllkessels geschlossen und der Fördergutdurchlass nach vorhergehendem Druckausgleich zwischen Förder und Füllkessel geöffnet wird.

Es sind Mittel zur Druckerfassung des Förderdrucks im Förderkessel vorgesehen, welche der Steuereinheit des Mörtel- und Estrichförderers mittelbar Informationen darüber liefern, ob der Förderschlauch sehr leer ist, d.h. einen geringen Förderwiderstand aufweist oder ob der Förderwiderstand im Förderschlauch sehr hoch ist. Versuche haben gezeigt, dass ein Fördersolldruck von 2-3 bar zu sehr guten Volumendurchsätzen führt, ohne dass die Gefahr von Schlauchverstopfungen besteht und ohne dass der Förderprozess unterbrochen werden muss. Die kontinuierliche Förderung auf Basis des erfindungsgemäßen Verfahrens ermöglicht die Förderung erdfeuchter Mörtelmassen mit einem W/Z-Faktor von 0,42 - 0,5 in einer Größenordnung von 10 m³/h bei einer Schlauchlänge von 20 Metern. Eine Förderleistung von 7 - 7,5 m³/h kann selbst dann noch erreicht werden, wenn die Länge des Förderschlauchs 60 - 70 Meter beträgt.

Die Effektivität des erfindungsgemäßen Verfahrens hängt nicht zuletzt von einer exakt arbeitenden Steuereinheit des Mörtel- und Estrich-Förderers ab. Die kontinuierliche Erfassung des Füllstands und des aktuellen Förderdrucks ist Voraussetzung dafür, dass die Steuereinheit sofort reagieren und für die Nachfüllung des Förderkessels sorgen kann.

Selbstverständlich ist auch eine manuelle Steuerung des Mörtel- und Estrichförderers denkbar, allerdings lassen sich dann die angestrebten hohen Förderleistungen nicht realisieren. Wenn beispielsweise eine Fördermenge von 10 m³/h angestrebt wird, bedeutet dies, dass pro Minute 0,166 m³ befördert werden müssen. Auf Grund der als vorteilhaft angesehenen kleinvolumigen Förderkessel mit einem Höchstfüllstand von beispielsweise 100 Litern und bei einem Mindestfüllstand von 30 Litern, ergibt sich, dass beim Nachfüllen von beispielsweise 70 Litern wenigstens 3 Mal/Minute ein Nachfüllen des Förderkessels erforderlich ist. Der sich wiederholende Ablauf zwischen dem Öffnen und Schließen des Förderguteinlasses und des Fördergutdurchlasses und die Ansteuerung der Druckventile etc, macht eine effektive manuelle Ansteuerung mehr oder weniger unmöglich und setzt eine Automatisierung voraus.

Es wird als günstig angesehen, wenn das Volumen des Förderkessels nur wenig von dem Volumen des Füllkessels abweicht. Die Volumina sollten um weniger als 50 % voneinander abweichen. Insbesondere kann das Volumen des Füllkessels etwa so groß gewählt werden, wie die Menge an Fördergut, die regelmäßig in den Förderkessel nachgeführt werden muss. In jedem Fall muss ein Überfüllen des Förderkessels vermieden werden, da zur Förderung ein hinreichend großes Druckpolster im Förderkessel vorhanden sein muss. Grundsätzlich sollten daher 20 % des Volumens des Förderkessels für das Druckpolster zur Verfügung stehen. Bei einem Wasser/Zement-Faktor < 0,45 sollte der Höchstfüllstand in dem Förderkessel maximal 150 Liter Fördergut betragen. Vorzugsweise ist der Höchstfüllstand jedoch niedriger zu wählen.

Als Mindestfüllstand eines Förderguts mit einem Wasser/Zement-Faktor < 0,45 in dem Förderkessel wird ein Bereich zwischen 20 und 50 Litern als vorteilhaft angesehen. Es wird betont, dass die Wahl der Höchstfüllstände und Mindestfüllstände stark abhängig von dem Wasser/Zement-Faktor ist. Die Fließfähigkeit eines Förderguts mit hohem Wasser/Zement-Faktor ist selbstverständlich wesentlich größer als bei einem Fördergut mit sehr niedrigem Wasser/Zement-Faktor. Grundsätzlich lässt sich jedoch festhalten, dass bei Fördergut mit einem Wasser/Zement-Faktor zwischen 0,42 und 0,45 Höchstfüllstände um ca. 100 Liter in einem entsprechend dimensionierten Förderkessel zu sehr guten Förderdurchsätzen führen, wenn die Steuerung unter Berücksichtigung des kontinuierlich erfassten Förderdrucks und des Füllstandes im Förderkessel entsprechend eingestellt ist.

Besonders einfach kann das Fördergut in den Förderkessel übertreten, wenn sich der Förderkessel unterhalb des Füllkessels befindet. In diesem Fall ist der Fördergutdurchlass gewissermaßen ein verschließbarer Schacht, wobei ein Rührwerk im Füllkessel dafür sorgt, dass beim Befüllen des Förderkessels ständig Fördergut in Richtung des Fördergutdurchlasses transportiert wird. Wie bereits erwähnt, kann es sich bei dem Rührwerk auch um ein Mischwerk handeln, um das Fördergut unmittelbar im Füllkessel fertig zu mischen.

Auf Grund der kurzen Zeitabstände zwischen Öffnen und Schließen des Fördergutdurchlasses und Förderguteinlasses sind Durchlässe bzw. Einlässe mit großem Querschnitt zweckmäßig. Als besonders robust für die druckfeste Abdichtung haben sich Stellklappen erwiesen, die insbesondere mit Hydraulikmotoren angetrieben werden.

Der erfindungsgemäße Mörtel- und Estrichförderer ist insbesondere mit einer selbstlemenden Steuerung versehen, die optimale Schaltverhältnisse in Bezug auf die Förderleistung findet und einstellt. Dazu ist vorgesehen, dass die Steuereinheit eine Speichereinheit aufweist zum Erfassen, wie oft Fördergut innerhalb eines vorgegebenen Zeitraumes in den Förderkessel nachgeführt werden muss. Das Ergebnis wird einer Auswerteeinheit zugeführt, welche die Anzahl der Wiederholungen im Verhältnis zur in dem vorgegebenen Zeitraum gemessenen Fördermenge berechnet. Die berechneten Verhältniswerte werden miteinander verglichen, wobei derjenige Verhältniswert mit dem größten Fördervolumen als Wiederholungssollwert herangezogen und der letztlich zur Steuerung des Mörtel- und Estrichfertigers an die Steuereinheit übermittelt wird. Dieser Wiederholungssollwert bestimmt gewissermaßen die Taktung, mit welchem Fördergut in den Förderkessel nachgeführt wird.

Die Erfindung wird im Nachfolgenden anhand der in schematischen Zeichnungen dargestellten Ausführungsbeispiele näher erläutert. Es zeigt:
Figur 1 in zwei Seitenansichten einen Mörtel- und Estrichförderer in ersten Ausführungsform;
Figur 2 in der Seitenansicht und teilweise im Längsschnitt eine zweite Ausführungsform eines Mörtel- und Estrichförderers;
Figur 3 in der Seitenansicht und teilweise im Längsschnitt eine dritte Ausführungsform eines Mörtel- und Estrichförderers und
Figur 4 eine in der Seitenansicht und teilweise im Längsschnitt eine vierte Ausführungsform eines Mörtel- und Estrichförderers.

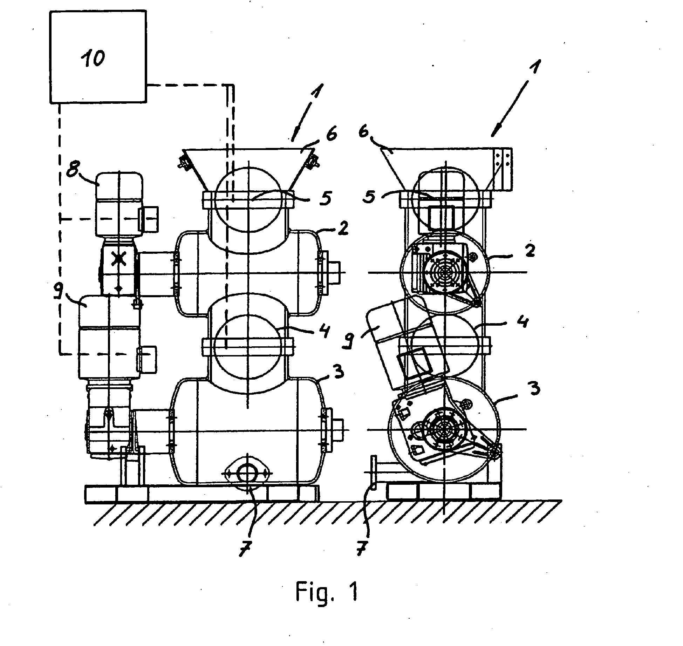

Figur 1 zeigt einen Mörtel- und Estrichförderer 1 in zwei unterschiedlichen Ansichten. Der dargestellte Mörtel- und Estrichförderer 1 besitzt einen Füllkessel 2, der oberhalb eines größer gestalteten Förderkessels 3 angeordnet ist. Der Füllkessel 2 und der Förderkessel 3 haben eine im Wesentlichen zylindrische Form, wobei ihre Längsachsen parallel zueinander und unmittelbar übereinander liegen. Der Füllkessel 2 ist mit dem Förderkessel 3 Ober einen Fördergutdurchlass 4 in Form einer verschließbaren Stellklappe verbunden. Eine weitere Stellklappe hat einen Förderguteinlass 5 an der Oberseite des Füllkessels 2. Oberhalb des Förderguteinlasses 5 befindet sich ein Befülltrichter 6, über welchen Fördergut aufgenommen und in den Füllkessel 2 eingebracht werden kann. Das Fördergut wird am unteren Ende des Förderkessels 3 in einen Förderschlauch gepresst, der an einen Förderschlauchanschluss am Tiefsten und etwa in der Mitte des Förderkessels 3 angeschlossen werden kann. Des Weiteren sind zwei Antriebsmotoren 8 und 9 zu erkennen, die über ein Winkelgetriebe ein in dieser Zeichnung nicht näher dargestelltes Rührwerk antreiben. Der obere Antriebsmotor 8 treibt ein Rührwerk im Füllkessel 2 an. Der untere Antriebsmotor 9 dient zum Antrieb des Rührwerks im Förderkessel 3.

Der dargestellte Mörtel- und Estrich-Förderer wird mit einer nicht näher dargestellten Druckluftquelle zur Druckbeaufschlagung des Förderkessels und des Füllkessels gekoppelt. Darüber hinaus ist eine schematisch angedeutete Steuereinheit vorgesehen, welche die Antriebsmotoren 8 und 9 ansteuert, sowie die insbesondere hydraulischen Antriebe für den Förderguteinlass 5 und den Fördergutdurchlass 4. Die Steuereinheit überwacht zudem die Leistungsaufnahme des Antriebsmotors 9 und den in dem Förderkessel 3 herrschenden Druck.

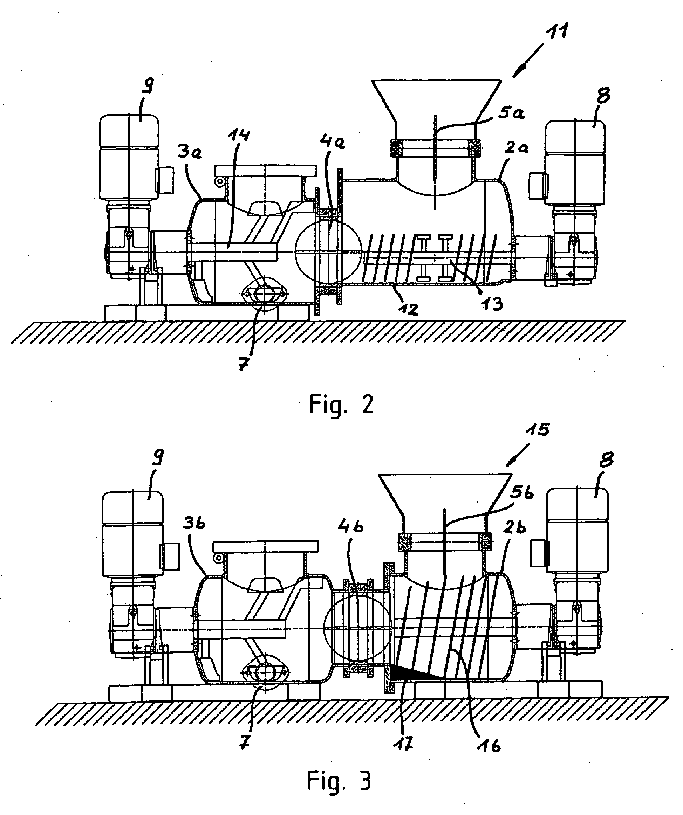

Während bei der Ausführungsform der Figur 1 Fördergut durch die Schwerkraft aus dem Füllkessel 2 in den Förderkessel 3 fallen kann, wobei die Überführung durch den Fördergutdurchlass 4 von einem Rührwerk im Füllkessel 2 unterstützt wird, sind bei der Ausführungsform der Figur 2 Füllkessel 2a und Förderkessel 3a nebeneinander angeordnet. Der dargestellte Mörtel- und Estrichförderer 11 weist daher einen horizontal angeordneten Fördergutdurchlass 4a auf, der sich zwischen dem Förderkessel 3a und dem Füllkessel 2a befindet. Bei dieser Darstellung ist zu erkennen, dass die Unterkante 12 des Füllkessels 2a höher liegt als die des Förderkessels 3a. Dadurch entfällt ein Höhenversatz zwischen dem Füllkessel 2a und dem Fördergutdurchlass 4a. Das Rührwerk 13 im unteren Bereich des Füllkessels 2a befördert bei Einschalten des Antriebsmotors 8 Fördergut in Richtung des Förderkessels 3a. Das Rührwerk 14 im Förderkessel 3a verteilt das Fördergut derart, dass es nicht zu Anhaftungen innerhalb des Förderkessels 3a kommt und derart, dass Fördergut immer in Richtung des Förderschlauchanschlusses 7 bewegt wird. Bezüglich der Funktionsweise des Förderguteinlasses 5a wird auf die Beschreibung zu Figur 1 verwiesen.

Die Ausführungsform der Figur 3 zeigt einen Mörtel- und Estrichförderer 15, der sich von der vorhergehenden Ausführungsform dadurch unterscheidet, dass die Mittellängsachsen des Füllkessels 2b und des Förderkessels 3b fluchten. Das macht eine etwas andere Konfiguration des Rührwerks 16 erforderlich, welches hier als sich in Richtung zum Förderkessel 3b verjüngende Schnecke konfiguriert ist, die das Fördergut über eine Rampe 17 in den Bereich des Fördergutdurchlasses 4b transportiert. Bezüglich der weiteren Komponenten wird auf die Beschreibung zu Figur 2 verwiesen.

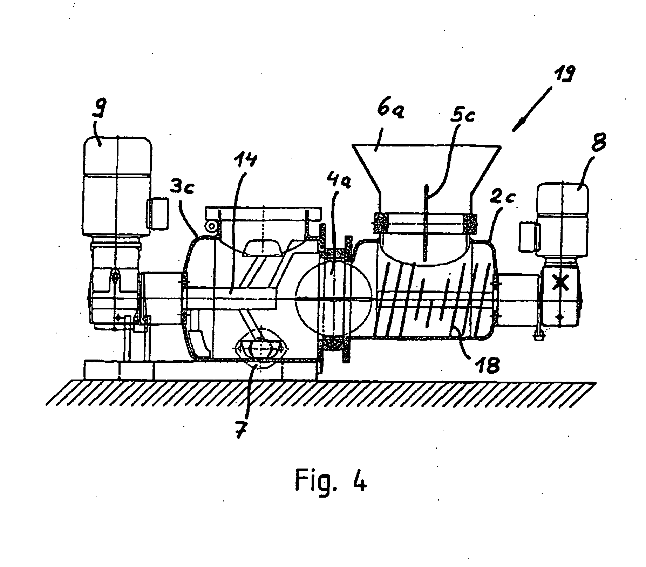

Figur 4 zeigt schließlich eine vierte Variante, die sich von derjenigen der Figur 2 dadurch unterscheidet, dass das Rührwerk 18 im Füllkessel 2c dieses Mörtel- und Estrich-Förderers 19 als Mischwerk ausgebildet ist, d.h. in dem Füllkessel 2a werden die einzelnen Bestandteile der Mörtel- bzw. Estrichmasse zusammengefügt. Daher ist auch der Trichter 6a größer gestaltet als bei den vorhergehenden Ausführungsformen. Ebenso ist der Förderguteinlass 5c größer dimensioniert. Der Fördergutdurchlass 4c sowie die Konfiguration des Förderkessels 3c entspricht derjenigen der Figur 2. Auf die dortigen Erläuterungen wird Bezug genommen.

### Bezugszeichen:

- 1 -: Mörtel- und Estrichförderer
- 2 -: Füllkessel
- 2a -: Füllkessel
- 2b -: Füllkessel
- 2c -: Füllkessel
- 3 -: Förderkessel
- 3a -: Förderkessel
- 3b -: Förderkessel
- 3c -: Förderkessel
- 4 -: Fördergutdurchlass
- 4a -: Fördergutdurchlass
- 4b -: Fördergutdurchlass
- 4c -: Fördergutdurchlass
- 5 -: Förderguteinlass
- 5a -: Förderguteinlass
- 5b -: Förderguteinlass
- 5c -: Förderguteinlass
- 6 -: Befülltrichter
- 6a -: Befülltrichter
- 7 -: Förderschlauchanschluss
- 8 -: Antriebsmotor
- 9 -: Antriebsmotor
- 10 -: Steuereinheit
- 11 -: Mörtel- und Estrichförderer
- 12 -: Unterkante
- 13 -: Rührwerk
- 14 -: Rührwerk
- 15 -: Mörtel- und Estrichförderer
- 16 -: Rührwerk
- 17-: Rampe
- 18 -: Rührwerk
- 19 -: Mörtel- und Estrichförderer.

## Patentansprüche

1. Mörtel- und Estrich-Förderverfahren mit folgenden Maßnahmen:
a) Bereitstellen eines Mörtel- und Estrichförderers (1, 11, 15, 19);
b) Anschließen einer Druckluftquelle an den Mörtel- und Estrichförderer (1, 11, 15, 19);
c) Befüllen eines Förderkessels (3, 3a-c) des Mörtel- und Estrichförderers (1, 11, 15. 19) mit Fördergut, das aus einem Füllkessel (2, 2a-c) des Mörtel- und Estrichförderers (1, 11, 15, 19) entnommen wird;
d) Schließen eines zwischen Füllkessel (2, 2a-c) und Förderkessel (3, 3a-c) angeordneten Fördergutdurchlasses (4, 4a-c);
e) Druckbeaufschlagung des geschlossenen Förderkessels (3, 3a-c), um Fördergut in einen an einen Anschlussstutzen (7) des Förderkessels (3, 3a-c) angeschlossenen Förderschlauch zu pressen;
f) Druckbeaufschlagung einer an den Anschlussstutzen (7) angeschlossenen Bypass-Druckleitung mit einem Druck, der maximal so groß ist, wie der im Förderkessel (3, 3a-c) herrschende Druck;
g) Erfassen des Füllstands und des Förderdrucks im Förderkessel (3, 3a-c) während des Fördervorgangs, wobei zum Befüllen des Förderkessels (3, 3a-c) ein Förderguteinlass (5, 5a-c) des Füllkessels (2, 2a-c) zu schließen ist und der Füllkessel (2, 2a-c) mit dem im Förderkessel (3, 3a-c) herrschenden Förderdruck beaufschlagt wird, so dass der Fördergutdurchlass (4, 4a-c) unter Aufrechterhaltung eines Fördersolldrucks im Förderkessel (3, 3a-c) geöffnet werden kann und Füllgut vom Füllkessel (2, 2a-c) in den Förderkessel (3, 3a-c) übertritt;
h) Schließen des Fördergutdurchlasses (4, 4a-c) und Druckentlastung des Füllkessels (2, 2a-c), um den Förderguteinlass (5, 5a-c) des Füllkessels (2, 2a-c) zu öffnen und um den Füllkessel (2, 2a-c) mit weiterem Fördergut zu beschicken;
i) Kontinuierliche Wiederholung der Schritte g) und h), **dadurch gekennzeichnet, dass** ein Befüllen des Förderkessels (3, 3a-c) nur dann erfolgt, wenn ein vorgegebener Mindestfüllstand des Förderkessels (3, 3a-c) erreicht wird und wenn der der Druck im Förderkessel (3, 3a-c) einen vorgegebenen Maximaldruck nicht überschreitet, und wobei während des Förderns ein Mindestdruck im Förderkessel (3, 3a-c) aufrecht erhalten wird, der größer als der Atmosphärendruck ist.

2. Verfahren nach Anspruch 1, **dadurch gekennzeichnet, dass** der Füllstand des Förderguts im Förderkessel (3, 3a-c) über die Leistungsaufnahme eines Antriebsmotors (9) eines Rührwerks (14) der Förderkessel (3, 3a-c) bestimmt wird.

3. Verfahren nach Anspruch 2, **dadurch gekennzeichnet, dass** bei Abfallen der Leistungsaufnahme unter einen Sollwert die Schritte g) bis i) des Patentanspruchs 1 durchgeführt werden.

4. Verfahren nach einem der Ansprüche 1 bis 3, **dadurch gekennzeichnet, dass** eine Steuereinheit (10) vorgesehen ist, über welche der Mörtel- und Estrichförderer (1, 11, 15, 19) derart angesteuert wird, dass die Schritte c) bis i) des Patentanspruchs 1 ausschließlich von der Steuereinheit (10) koordiniert werden.

5. Verfahren nach Anspruch 4, **dadurch gekennzeichnet, dass** die Steuereinheit (10) eine Speichereinheit aufweist, zum Erfassen, wie oft die Schritte f) und g) des Patentanspruchs 1 innerhalb eines vorgegebenen Zeitraums wiederholt werden, und wobei das Ergebnis einer Auswerteeinheit zugeführt wird, welche die Anzahl der Wiederholungen im Verhältnis zur in dem vorgegebenen Zeitraum gemessenen Fördermenge berechnet, wobei die berechneten Verhältniswerte miteinander verglichen werden und derjenige Verhältniswert mit dem größten Fördervolumen ein Wiederholungssollwert ergibt, der zur Steuerung des Mörtel- und Estrichförderers an die Steuereinheit (10) übermittelt wird.

6. Verfahren nach einem der Ansprüche 1 bis 5, **dadurch gekennzeichnet, dass** Mittel zur Drucküberwachung vorgesehen sind, um sicherzustellen, dass ein einstellbarer Drucktoleranzbereich des Fördersolldrucks nicht verlassen wird.

7. Verfahren nach einem der Ansprüche 1 bis 6, **dadurch gekennzeichnet, dass** das Anmischen des Förderguts im Füllkessel (2a) erfolgt.

8. Verfahren nach einem der Ansprüche 1 bis 7, **dadurch gekennzeichnet, dass** in den Förderkessel (3, 3a-c) maximal 150 Liter Fördergut mit einem Wasser/Zement-Faktor < 0,45 eingefüllt werden, wobei der Volumen des Förderkessels (3, 3a-c) mindestens 20% größer ist als der Höchstfüllstand des Förderguts in dem Förderkessel (3, 3a-c).

9. Verfahren nach Anspruch 7, **dadurch gekennzeichnet, dass** in den Förderkessel maximal 100 Liter Fördergut mit einem Wasser/Zement-Faktor < 0,45 eingefüllt werden.

10. Verfahren nach einem der Ansprüche 1 bis 9, **dadurch gekennzeichnet, dass** bei einem Anstieg des Drucks im Förderkessel (3, 3a-c) über eine vorgegebenen Maximalwert Druckluft über eine weitere Bypass-Druckleitung in einen entfernt vom Anschlussstutzen (7) gelegenen Abschnitt des Förderschlauchs eingeblasen wird.

11. Mörtel- und Estrichförderer umfassend einen Füllkessel (2, 2a-c) und einen dem Füllkessel (2, 2a-c) nachgeschalteten Förderkessel (3, 3a-c), eine Steuereinheit (10), Mittel zur Füllstandmessung des Förderguts im Förderkessel (3, 3a-c), wobei der Förderkessel (3, 3a-c) über einen druckfest verschließbaren Fördergutdurchlass (4, 4a-c) mit dem Füllkessel (2, 2a-c) verbunden ist und wobei der Füllkessel (2, 2a-c) einen druckfest verschließbaren Förderguteinlass (5, 5a-c) aufweist, wobei zu jedem Zeitpunkt des Fördervorgangs wenigstens der Förderguteinlass (5, 5a-c) und/oder der Fördergutdurchlass (4, 4a-c) verschlossen ist, so dass der Förderdruck im Förderkessel (3, 3a-c) immer größer ist als der Atmosphärendruck, und wobei an einen Anschlussstutzen (7) des Förderkessels (3, 3a-c) ein Förderschlauch sowie eine Bypass-Druckleitung angeschlossen sind, **dadurch gekennzeichnet, dass** der Mörtel- und Estrichförderer Drucküberwachungsmittel zur Erfassung des Förderdrucks im Förderkessel (3, 3a-c) umfasst.

12. Mörtel- und Estrichförderer nach Anspruch 11, **dadurch gekennzeichnet, dass** die Steuereinheit (10) unter Auswertung des gemessenen Förderdrucks und unter Berücksichtigung des gemessenen Füllstands dafür vorgesehen ist, den Förderguteinlass (5, 5a-c) und den Fördergutdurchlass (4, 4a-c) anzusteuern.

13. Mörtel- und Estrichförderer nach Anspruch 11 oder 12, **dadurch gekennzeichnet, dass** in dem Förderkessel (3, 3a-c) ein Rührwerk (14) angeordnet ist, wobei die Leistungsaufnahme des Rührwerksantriebs (9) als Parameter für den Füllstand des Förderkessels (3, 3a-c) dient.

14. Mörtel- und Estrichförderer nach einem der Ansprüche 11 bis 13, **dadurch gekennzeichnet, dass** die Volumina des Förderkessels (3, 3a-c) und des Füllkessel (2, 2a-c) um weniger als 50 % voneinander abweichen.

15. Mörtel- und Estrichförderer nach einem der Ansprüche 11 bis 14, **dadurch gekennzeichnet, dass** der Füllkessel (2, 2a-c) ein kleineres Volumen besitzt als der Förderkessel (3, 3a-c).

16. Mörtel- und Estrichförderer nach einem der Ansprüche 11 bis 15, **dadurch gekennzeichnet, dass** der Höchstfüllstand in dem Förderkessel (3, 3a-c) maximal 150 Liter Fördergut mit einem Wasser/Zement-Faktor < 0,45 beträgt.

17. Mörtel- und Estrichförderer nach einem der Ansprüche 11 bis 16, **dadurch gekennzeichnet, dass** der Mindestfüllstand eines Förderguts mit einem Wasser/Zement-Faktor < 0,45 in dem Förderkessel (3, 3a-c) zwischen 20 Litern und 50 Litern liegt.

18. Mörtel- und Estrichförderer nach einem der Ansprüche 11 bis 17, **dadurch gekennzeichnet, dass** der Förderkessel (3) unterhalb des Füllkessels (2) angeordnet ist.

19. Mörtel- und Estrichförderer nach einem der Ansprüche 11 bis 17, **dadurch gekennzeichnet, dass** der Füllkessel (2a-c) neben dem Förderkessel (3a-c) angeordnet ist.

20. Mörtel- und Estrichförderer nach einem der Ansprüche 11 bis 19, **dadurch gekennzeichnet, dass** im Füllkessel (2, 2a-c) ein Mischwerk (18) angeordnet ist.

21. Mörtel- und Estrichförderer nach einem der Ansprüche 11 bis 20, **dadurch gekennzeichnet, dass** der Fördergutdurchlass (4, 4a-c) und der Förderguteinlass (5, 5a-c) von Stellklappen gebildet sind.

## Claims

1. Method of conveying mortar and screed, comprising the following measures:
a) provision of a mortar and screed conveyor (1, 11, 15, 19);
b) connecting a compressed air source to the mortar and screed conveyor (1, 11, 15, 19);
c) filling a conveying vessel (3, 3a-c) of the mortar and screed conveyor (1, 11, 15, 19) with feed material which is taken from a filling vessel (2, 2a-c) of the mortar and screed conveyor (1, 11, 15, 19);
d) closing a feed material passage (4, 4a-c) arranged between the filling vessel (2, 2a-c) and conveying vessel (3, 3a-c);
e) pressurizing the closed conveying vessel (3, 3a-c) in order to force feed material into a delivery hose connected to a connecting stub (7) of the conveying vessel (3, 3a-c);
f) pressurizing a bypass pressure line connected to the connecting stub (7) at a pressure which is at most as great as the pressure prevailing in the conveying vessel (3, 3a-c);
g) determining the filling level and the conveying pressure in the conveying vessel (3, 3a-c) during the conveying operation, wherein, in order to fill the conveying vessel (3, 3a-c), a feed material inlet (5, 5a-c) of the filling vessel (2, 2a-c) must be closed and the filling vessel (2, 2a-c) is pressurized at the conveying pressure prevailing in the conveying vessel (3, 3a-c), with the result that the feed material passage (4, 4a-c) can be opened while maintaining a setpoint conveying pressure in the conveying vessel (3, 3a-c) and filling material passes from the filling vessel (2, 2a-c) into the conveying vessel (3, 3a-c);
h) closing the feed material passage (4, 4a-c) and relieving the pressure in the filling vessel (2, 2a-c) in order to open the feed material inlet (5, 5a-c) of the filling vessel (2, 2a-c) and in order to charge the filling vessel (2, 2a-c) with further feed material;
i) continuously repeating steps g) and h), **characterized in that** filling of the conveying vessel (3, 3a-c) only takes place when a predetermined minimum filling level in the conveying vessel (3, 3a-c) is reached and when the pressure in the conveying vessel (3, 3a-c) does not exceed a predetermined maximum pressure, and wherein a minimum pressure which is greater than atmospheric pressure is maintained in the conveying vessel (3, 3a-c) during the conveying process.

2. Method according to Claim 1, **characterized in that** the filling level of the feed material in the conveying vessel (3, 3a-c) is determined via the power consumption of a drive motor (9) of a stirring unit (14) of the conveying vessel (3, 3a-c).

3. Method according to Claim 2, **characterized in that** the steps g) to i) of Patent Claim 1 are carried out if the power consumption falls below a setpoint value.

4. Method according to one of Claims 1 to 3, **characterized in that** a control unit (10) is provided via which the mortar and screed conveyor (1, 11, 15, 19) is controlled in such a way that the steps c) to i) of Patent Claim 1 are coordinated exclusively by the control unit (10).

5. Method according to Claim 4, **characterized in that** the control unit (10) comprises a memory unit for determining how often the steps f) and g) of Patent Claim 1 are repeated within a predetermined time period, and wherein the result is sent to an evaluation unit which calculates the number of repetitions in relation to the conveyed quantity measured in the predetermined time period, wherein the calculated ratio values are compared with one another and that ratio value with the greatest conveyed volume gives a setpoint repetition value which is transmitted to the control unit (10) in order to control the mortar and screed conveyor.

6. Method according to one of Claims 1 to 5, **characterized in that** means for pressure monitoring are provided in order to ensure that an adjustable tolerance range of the setpoint conveying pressure is not departed from.

7. Method according to one of Claims 1 to 6, **characterized in that** the feed material is mixed in the filling vessel (2a).

8. Method according to one of Claims 1 to 7, **characterized in that** a maximum of 150 litres of feed material having a water/cement factor < 0.45 are introduced into the conveying vessel (3, 3a-c), wherein the volume of the conveying vessel (3, 3a-c) is at least 20% larger than the maximum filling level of the feed material in the conveying vessel (3, 3a-c).

9. Method according to Claim 7, **characterized in that** a maximum of 100 litres of feed material having a water/cement factor < 0.45 are introduced into the conveying vessel.

10. Method according to one of Claims 1 to 9, **characterized in that**, in the event of the pressure in the conveying vessel (3, 3a-c) rising above a predetermined maximum value, compressed air is blown via a further bypass pressure line into a section of the delivery hose that is situated remotely from the connecting stub (7).

11. Mortar and screed conveyor comprising a filling vessel (2, 2a-c) and a conveying vessel (3, 3a-c) connected downstream of the filling vessel (2, 2a-c), a control unit (10) and means for measuring the filling level of the feed material in the conveying vessel (3, 3a-c), wherein the conveying vessel (3, 3a-c) is connected to the filling vessel (2, 2a-c) via a feed material passage (4, 4a-c) which can be closed in a pressure-tight manner and wherein the filling vessel (2, 2a-c) comprises a feed material inlet (5, 5a-c) which can be closed in a pressure-tight manner, wherein at least the feed material inlet (5, 5a-c) and/or the feed material passage (4, 4a-c) is closed at all times during the conveying operation, with the result that the conveying pressure in the conveying vessel (3, 3a-c) is always greater than atmospheric pressure, and wherein a delivery hose and a bypass pressure line are connected to a connecting stub (7) of the conveying vessel (3, 3a-c), **characterized in that** the mortar and screed conveyor comprises pressure-monitoring means for determining the conveying pressure in the conveying vessel (3, 3a-c).

12. Mortar and screed conveyor according to Claim 11, **characterized in that** the control unit (10) is intended to control the feed material inlet (5, 5a-c) and the feed material passage (4, 4a-c) while evaluating the measured conveying pressure and while taking account of the measured filling level.

13. Mortar and screed conveyor according to Claim 11 or 12, **characterized in that** a stirring unit (14) is arranged in the conveying vessel (3, 3a-c), wherein the power consumption of the stirring unit drive (9) serves as parameter for the filling level of the conveying vessel (3, 3a-c).

14. Mortar and screed conveyor according to one of Claims 11 to 13, **characterized in that** the volumes of the conveying vessel (3, 3a-c) and the filling vessel (2, 2a-c) differ from one another by less than 50%.

15. Mortar and screed conveyor according to one of Claims 11 to 14, **characterized in that** the filling vessel (2, 2a-c) has a smaller volume than the conveying vessel (3, 3a-c).

16. Mortar and screed conveyor according to one of Claims 11 to 15, **characterized in that** the maximum filling level in the conveying vessel (3, 3a-c) is at most 150 litres of feed material having a water/cement factor < 0.45.

17. Mortar and screed conveyor according to one of Claims 11 to 16, **characterized in that** the minimum filling level of a feed material having a water/cement factor < 0.45 in the conveying vessel (3, 3a-c) is between 20 litres and 50 litres.

18. Mortar and screed conveyor according to one of Claims 11 to 17, **characterized in that** the conveying vessel (3) is arranged below the filling vessel (2).

19. Mortar and screed conveyor according to one of Claims 11 to 17, **characterized in that** the filling vessel (2a-c) is arranged alongside the conveying vessel (3a-c).

20. Mortar and screed conveyor according to one of Claims 11 to 19, **characterized in that** a mixing unit (18) is arranged in the filling vessel (2, 2a-c).

21. Mortar and screed conveyor according to one of Claims 11 to 20, **characterized in that** the feed material passage (4, 4a-c) and the feed material inlet (5, 5a-c) are formed by control flaps.

## Revendications

1. Procédé de convoyage de mortier et matériau de chape, comprenant les étapes suivantes :
a) on met à disposition un convoyeur pour mortier et matériau de chape (1, 11, 15, 19) ;
b) on raccorde une source d'air comprimé au convoyeur pour mortier et matériau de chape (1, 11, 15, 19) ;
c) on remplit avec un produit à convoyer un récipient de convoyage (3, 3a-c) du convoyeur (1, 11, 15, 19) pour mortier et matériau de chape, le produit étant prélevé d'un récipient de remplissage (2, 2a-c) du convoyeur (1, 11, 15, 19) ;
d) on ferme un passage à produit (4, 4a-c) agencé entre le récipient de remplissage (2, 2a-c) et le récipient de convoyage (3, 3a-c) ;
e) on met sous pression le récipient de convoyage (3, 3a-c) à l'état fermé afin de chasser sous pression le produit à convoyer dans un tuyau de convoyage raccordé à une pipe de raccordement (7) du récipient de convoyage (3, 3a-c) ;
f) on met sous pression une conduite de by-pass raccordée à la pipe de raccordement (7) sous une pression qui est au maximum aussi élevée que la pression qui règne dans le récipient de convoyage (3, 3a-c) ;
g) on détecte le niveau de remplissage et la pression de convoyage dans le récipient de convoyage (3, 3a-c) pendant l'opération de convoyage, et pour remplir le récipient de convoyage (3, 3a-c), une entrée de produit à convoyer (5, 5a-c) du récipient de remplissage (2, 2a-c) doit être fermée et le récipient de remplissage (2, 2a-c) est mis sous la pression de convoyage qui règne dans le récipient de convoyage (3, 3a-c), de sorte que le passage de produit à convoyer (4, 4a-c) peut être ouvert tout en maintenant une pression de convoyage de consigne dans le récipient de convoyage (3, 3a-c), et le produit passe du récipient de remplissage (2, 2a-c) jusque dans le récipient de convoyage (3, 3a-c) ;
h) on ferme le passage de produit à convoyer (4, 4a-c), et on décharge la pression du récipient de remplissage (2, 2a-c) afin d'ouvrir l'entrée de produit à convoyer (5, 5a-c) dans le récipient de remplissage (2, 2a-c), et de charger le récipient de remplissage (2, 2a-c) avec un complément de produit à convoyer ; et
i) on répète de façon continue les étapes g) et h),
**caractérisé en ce qu'**un remplissage du récipient de convoyage (3, 3a-c) n'a lieu que lorsqu'on a atteint un niveau de remplissage minimum prédéterminé dans le récipient de convoyage (3, 3a-c) et que si la pression dans le récipient de convoyage (3, 3a-c) ne dépasse pas une pression maximum prédéterminée, et pendant le convoyage on maintient une pression minimum dans le récipient de convoyage (3, 3a-c), supérieure à la pression atmosphérique.

2. Procédé selon la revendication 1, **caractérisé en ce que** le niveau de remplissage du produit à convoyer dans le récipient de convoyage (3, 3a-c) est déterminé par la consommation de puissance d'un moteur d'entraînement (9) d'un agitateur (14) du récipient de convoyage (3, 3a-c).

3. Procédé selon la revendication 2, **caractérisé en ce qu'**en cas de chute de la consommation de puissance au-dessous d'une valeur de consigne, on exécute les étapes g) à i) de la revendication 1.

4. Procédé selon l'une des revendications 1 à 3, **caractérisé en ce qu'**il est prévu une unité de commande (10) via laquelle le convoyeur (1, 11, 15, 19) peut être piloté de telle façon que les étapes c) à i) de la revendication 1 sont coordonnées exclusivement par l'unité de commande (10).

5. Procédé selon la revendication 4, **caractérisé en ce que** l'unité de commande (10) comprend une unité à mémoire afin de détecter à quelle fréquence les étapes f) et g) de la revendication 1 sont répétées à l'intérieur d'une période temporelle prédéterminée, et le résultat est fourni à une unité d'évaluation qui calcule le nombre de répétitions, par rapport à la quantité convoyée mesurée pendant la période temporelle prédéterminée, et les valeurs de rapports calculés sont comparées les unes aux autres, et la valeur de rapport qui correspond au plus grand volume convoyé donne en résultat une valeur de consigne de répétition qui est transmise à l'unité de commande (10) pour la commande du convoyeur pour mortier et matériau de chape.

6. Procédé selon l'une des revendications 1 à 5, **caractérisé en ce qu'**il est prévu des moyens de surveillance de pression, pour garantir que l'on ne va pas quitter une plage de tolérance de pression réglable pour la pression de consigne de convoyage.

7. Procédé selon l'une des revendications 1 à 6, **caractérisé en ce que** le gâchage du produit à convoyer a lieu dans le récipient de remplissage (2a).

8. Procédé selon l'une des revendications 1 à 7, **caractérisé en ce que** l'on remplit dans le récipient de convoyage (3, 3a-c) au maximum 150 L de produit à convoyer avec un facteur eau/ciment < 0,45, et le volume du récipient de convoyage (3, 3a-c) est au moins 20 % plus grand que le niveau de remplissage maximum du produit à convoyer dans le récipient de convoyage (3, 3a-c).

9. Procédé selon la revendication 7, **caractérisé en ce que** l'on remplit dans le récipient de convoyage au maximum 100 L de produit à convoyer avec un facteur eau/ciment < 0,45.

10. Procédé selon l'une des revendications 1 à 9, **caractérisé en ce que** lors d'une montée de la pression dans le récipient de convoyage (3, 3a-c) au-delà d'une valeur maximum prédéterminée, de l'air comprimé est soufflé, via une autre conduite de by-pass, dans un tronçon, éloigné de la pipe de raccordement (7), du tuyau de convoyage.

11. Appareil de convoyage pour mortier et matériau de chape, comprenant un récipient de remplissage (2, 2a-c) et un récipient de convoyage (3, 3a-c) disposé en aval du récipient de remplissage (2, 2a-c), une unité de commande (10), des moyens pour mesurer le niveau de remplissage du produit à convoyer dans le récipient de convoyage (3, 3a-c), dans lequel le récipient de convoyage (3, 3a-c) est relié au récipient de remplissage (2, 2a-c) via un passage pour produit à convoyer (4, 4a-c), susceptible d'être obturé de façon étanche à la pression, et dans lequel le récipient de remplissage (2, 2a-c) comprend une entrée de matériau (5, 5a-c) susceptible d'être obturée de façon étanche à la pression, et à tout instant du processus de convoyage, au moins l'entrée de produit (5, 5a-c) et/ou le passage de produit (4, 4a-c) est obturé, de sorte que la pression de convoyage dans le récipient de convoyage (3, 3a-c) est toujours plus élevée que la pression atmosphérique, et un tuyau de convoyage ainsi qu'une conduite de by-pass sont raccordés à une pipe de raccordement (7) du récipient de convoyage (3, 3a-c),
**caractérisé en ce que** l'appareil de convoyage de mortier et matériau de chape comprend des moyens de surveillance de pression pour détecter la pression de convoyage dans le récipient de convoyage (3, 3a-c).

12. Appareil de convoyage de mortier et matériau de chape selon la revendication 11, **caractérisé en ce que** l'unité de commande (10) est prévue pour, après évaluation de la pression de convoyage mesurée et prise en compte du niveau de remplissage mesuré, piloter l'entrée (5, 5a-c) et le passage (4, 4a-c) pour le produit à convoyer.

13. Appareil de convoyage de mortier et matériau de chape selon la revendication 11 ou 12, **caractérisé en ce qu'**un mécanisme agitateur (14) est agencé dans le récipient de convoyage (3, 3a-c), la consommation de puissance de l'entraînement (9) du mécanisme agitateur servant d'un paramètre pour le niveau de remplissage du récipient de convoyage (3, 3a-c).

14. Appareil de convoyage de mortier et matériau de chape selon l'une des revendications 11 à 13, **caractérisé en ce que** les volumes du récipient de convoyage (3, 3a-c) et du récipient de remplissage (2, 2a-c) diffèrent l'un de l'autre de moins de 50 %.

15. Appareil de convoyage de mortier et matériau de chape selon l'une des revendications 11 à 14, **caractérisé en ce que** le récipient de remplissage (2, 2a-c) possède un volume plus petit que le récipient de convoyage (3, 3a-c).

16. Appareil de convoyage de mortier et matériau de chape selon l'une des revendications 11 à 15, **caractérisé en ce que** le niveau de remplissage maximum dans le récipient de convoyage (3, 3a-c) est au maximum de 150 L de matériau à convoyer avec un facteur eau/ciment < 0,45.

17. Appareil de convoyage de mortier et matériau de chape selon l'une des revendications 11 à 16, **caractérisé en ce que** le niveau de remplissage minimum d'un produit à convoyer avec un facteur eau/ciment < 0,45 dans le récipient de convoyage (3, 3a-c) est compris entre 20 L et 50 L.

18. Appareil de convoyage de mortier et matériau de chape selon l'une des revendications 11 à 17, **caractérisé en ce que** le récipient de convoyage (3) est agencé au-dessous du récipient de remplissage (2).

19. Appareil de convoyage de mortier et matériau de chape selon l'une des revendications 11 à 17, **caractérisé en ce que** le récipient de remplissage (2a-c) est agencé à côté du récipient de convoyage (3a-c).

20. Appareil de convoyage de mortier et matériau de chape selon l'une des revendications 11 à 19, **caractérisé en ce qu'**un mécanisme mélangeur (18) est agencé dans le récipient de remplissage (2, 2a-c).

21. Appareil de convoyage de mortier et matériau de chape selon l'une des revendications 11 à 20, **caractérisé en ce que** le passage (4, 4a-c) pour le produit à convoyer et l'entrée (5, 5a-c) pour le produit à convoyer sont formés par des clapets de positionnement.
